Europäisches Patentamt

European Patent Office

Office européen des brevets

(11) Publication number: **0 225 007**
**B1**

(12) **EUROPEAN PATENT SPECIFICATION**

(45) Date of publication of patent specification: **09.05.90**

(51) Int. Cl.⁵: **H 02 H 3/093**

(21) Application number: **86307379.7**

(22) Date of filing: **25.09.86**

(54) Improved control circuit for a circuit interrupter.

(30) Priority: **25.10.85 US 791195**

(43) Date of publication of application:
**10.06.87 Bulletin 87/24**

(45) Publication of the grant of the patent:
**09.05.90 Bulletin 90/19**

(84) Designated Contracting States:
**AT BE CH DE FR GB IT LI NL SE**

(56) References cited:
**EP-A-0 129 624
DE-A-1 538 416
DE-B-1 074 132
DE-C-1 175 771
US-A-4 297 741**

(73) Proprietor: **S & C ELECTRIC COMPANY
6601 North Ridge Boulevard
Chicago Illinois 60626 (US)**

(72) Inventor: **Ruta, Joseph W.
1314 E. Crabtree Drive
Arlington Heights Illinois 60004 (US)**

(74) Representative: **Muir, Ian R. et al
HASELTINE LAKE & CO. Hazlitt House 28
Southampton Buildings Chancery Lane
London WC2A 1AT (GB)**

Courier Press, Leamington Spa, England.

## Description

This application is directed to improvements in the control circuits disclosed and claimed in U.S. Patents 4,567,540 and 4,571,658, and in EP—A—0129623. In a preferred arrangement, this application utilizes the current-sensing arrangement disclosed in EP—A—0225006.

The present invention relates to an electrical control circuit for generating signals to operate a circuit interrupter in a line carrying alternating current and, more specifically, to a circuit for generating a trip signal in accordance with a predetermined time-current characteristic and for initiating the interruption of overcurrent at a time when the instantaneous current is within the interrupting capability of the circuit interrupter at the time of interruption for overcurrents which have instantaneous values greater that the instantaneous interrupting capability of the circuit interrupter.

Various control circuits are known in the prior art for controlling circuit interrupters upon the occurrence of overcurrent conditions; i.e. currents which are greater than the highest desirable operating current in an alternating current line. For example, the following references disclose various combinations of short-time, long-time, and instantaneous trip circuits: Boyd, U.S. Patent No, 3,831,061; Pant et al, U.S. Patent No. 4,442,472; Chen et al., U.S. Patent No, 4,347,541; Howell, U.S. Patent No. 4,297,741; and Shimp, U.S. Patent No. 4,258,403. The Howell reference, U.S. Patent No. 4,297,741, utilizes an iron core transformer for providing current signals to long-time and short-time trip circuits. An air core transformer is utilized to develop signals proportional to the rate of change of the current as an input to an instantaneous trip circuit. Additionally, the following references relate to various protection arrangements utilizing, for their operation, the rate of change of current (di/dt) or the rate of change of current in combination with one or more current levels: Keders et al, "A Current-Limiting Device for Service Voltages Up to 34.5 kV", July 18, 1976, 7 pages, IEEE PES Summer Meeting, Paper No. 76436-6; Bottger, "The Application of Is-Limiters in Three Phase Systems", pages 1—7, 1967, Calor-Emag Company, Germany; Calor-Emag Company, Leaflet No. 1197/6E, "Fault Levels Too High?", 2 pages, date unknown; M. C. Blythe "Limiting Fault Currents Between Private and Public Networks", 4 pages, October 5, 1973, reprinted from Electrical Review, Calor-Emag; P. J. Kroon, "Development and Application of a 69-kV Fault Current Limiter", pages 237—244, April 1, 1971, 7th IEEE/PES Transmission and Distribution Conference and Exposition; "Pyristor Pryrotechnic Systems", Carbone Ferraz, Inc. brochure, date unknown; and "Prototype Fault Current Limiter", EPRI Report, EL-1396, May 1980, pages 7-1 to 7-19, 8-1 Palo Alto, California.

EP—A—0129624 discloses an arrangement with an instantaneous and a time-current trip signal generator. When parameters of the current indicate that the interrupting capabilities of the interrupting device will be exceeded, the instantaneous trip signal generator operates to produce a signal. However the signal is produced after a delay that is not inversely related to the line current.

While these arrangements may be generally suitable for their intended purposes, prior protection arrangements operating in accordance with a time-current characteristic including inverse-time portions have only been capable of operation for overcurrents that have maximum current levels within the interrupting capabilities of the circuit interrupter as defined in terms of the instantaneous magnitude of the current at the time of interruption.

According to the present invention, there is provided a control circuit responsive to the line current in an alternating-current line for providing a trip signal, the control circuit comprising:

signal generator means responsive to the line current for producing a control signal in the presence of line currents above a predetermined level and after the passage of a time delay that is inversely related to the line current, characterised in that the control circuit comprises:

a decision circuit for predicting, on the basis of one or more parameters of the line current, whether the instantaneous value of the line current will exceed a first predetermined instantaneous current level; and

means for providing a trip signal in response to said control signal when the instantaneous value of the current is not predicted to exceed the first predetermined instantaneous current level, and, when the instantaneous value of the current is predicted to exceed the first predetermined instantaneous current level, for providing a trip signal in response to said control signal and at a suitable point in the waveform of the alternating current such that the trip signal is generated only when the instantaneous value of the line current is below a second predetermined instantaneous current level which is below the first predetermined instantaneous circuit level.

Further developments of the invention are characterized by the features of the dependent claims.

Thus, there is provided a control circuit for a circuit interrupter to achieve an inverse-time characteristic for over-currents that include instantaneous current levels higher than the instantaneous interrupting capability of the circuit interrupter by synchronizing the operation of the circuit interrupter to ensure that circuit interruption takes place when the instantaneous current is within the interrupting capability of the circuit interrupter. This interrupting capability is similar to let-through current and is defined by the instantaneous magnitude of the current at the time of interruption or at a particular stage thereof. This instantaneous interrupting capability is not to be confused with the interrupter rating of the interrupter device which relates to the maximum available rms current for which the interrupter device is rated. The control circuit is responsive to a time-current characteristic signal generator that provides a time-current signal in response to overcurrent after the passage of a time delay that is inversely related to the overcurrent. The control circuit utilizes the time-current signal to permit a synchronous operation of the circuit interrupter when the peak of the overcurrent is expected to be within the interrupting capabilities of the circuit interrupter and to control operation of the circuit interrupter in a manner synchronized with the overcurrent when the peak of the overcurrent is expected to exceed the interrupting capabilities of the circuit interrupter; the interruption in the synchronized manner being arranged to occur when the instantaneous current is within the interrupting capabilities of the circuit interrupter. In a preferred arrangement, the rate of change of the current and the instantaneous current level are utilized to decide of the overcurrent may include instantaneous current levels higher than the instantaneous interrupting capabilities of the circuit interrupter. If such overcurrents are predicted, the rate of change of the current and the instantaneous current being within a predetermined current range are utilized to synchronize operation of the circuit interrupter.

Fig. 1 is a block logic, and schematic diagram of the control circuit of the present invention for operating the illustrated interrupter operator and circuit interrupter;

Figs. 2 and 3 are diagrammatic representations of various time-current characteristic relationships that exemplify the operation of the control circuit of Fig. 1;

Figs. 4 and 5 are diagrammatic representations of an overcurrent waveform illustrating operational parameters of the present invention, Fig. 5 being a portion of Fig. 4 on an enlarged scale; and

Fig. 6 is a schematic and logic diagram of the parameter signal generator and the decision circuit of Fig. 1.

Detailed description

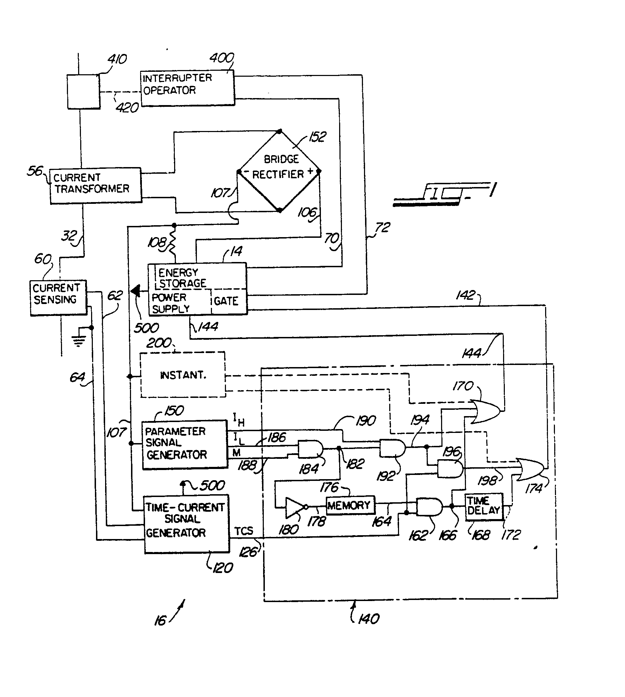

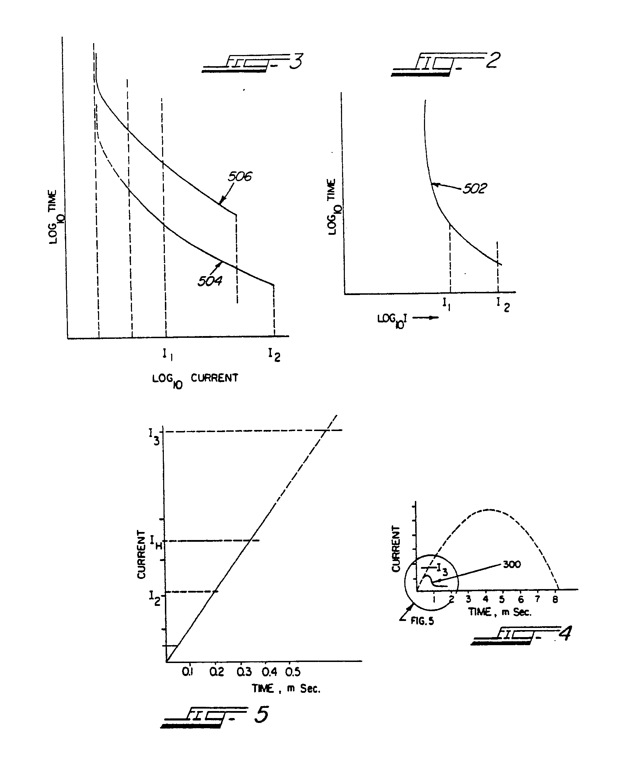

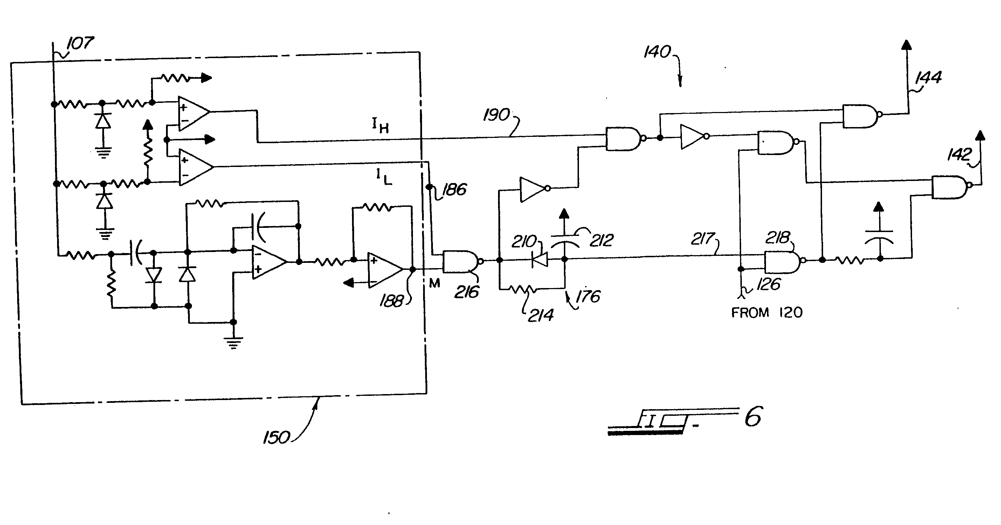

Referring to Fig. 1, the present invention relates to a control circuit 16 that operates an interrupter operator 400 in response to overcurrent in a line 32 in accordance with a predetermined time-current characteristic. Several exemplary time-current characteristics are illustrated in Figs. 2 and 3. Operation of the interrupter operator 400 causes the operation of a circuit interrupter 410 in the line 32, as illustrated by the dashed line 420. The interrupter operator 400 may be a power cartridge (gas generator), a solenoid, a relay, or an alarm. With additional reference to Fig. 4 each of the exemplary time-current characteristics of Figs. 2 and 3 provides for interruption of overcurrents in the line 32 which includes instantaneous currents that are greater that the interrupting capabilities of the circuit interrupter $I_3$ (Fig. 4) as defined by the instantaneous magnitude of the overcurrent at the time of interruption or at a particular stage thereof. The overcurrent waveform of Fig. 4 is representative of the current $I_2$. For example, the log-log plot 502 of current versus time in Fig. 2 represents the interruption characteristic for overcurrents up to an upper RMS current $I_2$ that can be achieved utilizing a circuit interrupter that is capable of interruption operation only up to the peak current value $I_3$ that may occur in the presence of the RMS current $I_1$.

The control value 16 is responsive to signals representing the current in the line 32. In a preferred arrangement, a current transformer 56 and a full-wave bridge rectifier 152 produce on outputs 106 and 107 current signals proportional to the current in the line 32. As one skilled in the art will recognize, suitable means other than the current transformer 56 and the rectifier 152 may be used to provide signals proportional to the current in the line 32. In a preferred arrangement, an additional current-sensing arrangement 60 is also provided which produces on outputs 62 and 64 current signals proportional to the current in the line 32. Hoever, it should be realized that the present invention may be practiced without the additional current-sensing arrangement 60.

The control circuit 16 also includes a power supply 14 of the type described in U.S. Patent No. 4,567,540 and a time-current signal generator 120 such as that described in European Patent Application No. 83305992.6. The power supply 14 includes an energy storage circuit connected to the outputs 106 and 107 for storing energy derived from the current signals thereon. As illustrated in U.S. Patent No. 4,567,540 the power supply 14 further contains a switch circuit and an associated control circuit which maintain the amount of energy stored in the energy storage circuit within a first range when there is no overcurrent in the line 32. The stored energy powers a regulated power supply, which supplies operating power to other portions of the control circuit 16 as generally shown at 500 in Fig. 1. Stored energy within the first range is generally insufficient to reliably operate the interrupter operator 400 for current below $I_1$ in Fig. 2. When required, energy within a second, higher range is stored for this purpose. Energy within the second range is stored in the energy storage circuit of the power supply 14 only on an "as needed" basis, i.e., only when operation of the circuit interrupter 410 by the energy storage circuit is required. This enables the power supply 14 to operate within a lower energy range during steady state (non-overcurrent) conditions, which lengthens component life and improves circuit accuracy.

As described more fully in European Application No. 83305992.6, the time-current signal generator 120 responds to current signals on lines 107 and/or 62 which represent overcurrents in the line 32. When the time-current signal generator 120 receives a current signal at 107 and/or 62 representing overcurrent in the line 32, it applied a time-current signal (referred to as TCS signal hereinafter) at an output 126 after the passage of a time period inversely proportional to the difference between the overcurrent and the threshold current. The start of the time period is coincident with the onset of overcurrent in the line 32.

The power supply 14 controls the interrupter operator 400 over lines 70 and 72. A gate in the power supply 14 is operated by a trip signal on a line 142 such that the energy stored in the power supply 14 and the current in line 106 are applied to the interrupter operator. The power supply 14 is also responsive to signals on a stored energy control line 144 to increase the stored energy. As will be explained in more detail hereinafter, for circuit interruption operation for overcurrents below $I_1$, the trip signal 142 is delayed after the TCS signal and with respect to the stored energy control signal at 144 to allow sufficient time for the power supply 14 to suitably increase the stored energy.

In accordance with important aspects of the present invention, the control circuit 16 also includes a decision circuit 140 that provides the trip signal at 142 to the power supply 14 and the energy storage control signal at 144 to the power supply 14. The decision circuit generates the signals 142 and 144 in response to the TCS signal at 126 and one or more instantaneous current parameters from a parameter signal generator 150. The decision circuit 140 is effective to allow generation of the trip signal 142 and the energy storage control signal 144 after the occurrence of the TCS signal 126 when the overcurrent in line 32 satisfies certain predetermined conditions that ensure that the peak overcurrent that may occur in the presence of the current $I_1$ rms (Fig. 2) is equal to or less than a predetermined current level $I_3$ (Fig. 4). The current $I_3$ in various arrangements is either equal to or less than the maximum interrupting capabilities of the interrupter device 410 as defined in terms of the instantaneous magnitude of the current at the time of interruption or at a particular stage thereof. For example, and referring now to Figs. 4 and 5, a high overcurrent waveform is illustrated which may be representative of the current $I_2$ rms and includes instantaneous currents that are greater than $I_3$. If the decision circuit determines that the instantaneous current associated with an overcurrent may exceed $I_3$, upon the occurrence of the TCS signal at 126, the decision circuit 140 generates the energy storage control signal 144 and the trip signal 142 only when the instantaneous value of the overcurrent is appropriate for operation of the circuit interrupter 410, as determined by selected instantaneous characteristics of the line current. Accordingly, the decision circuit 140 allows random or asynchronous operation of the circuit interrupter 410 in response to the TCS signal at 126 when the peak overcurrent is within the capability of the circuit interrupter 410 and synchronizes the operation of the circuit interrupter 410 when the overcurrent may include values which are greater than the instantaneous capability of the circuit interrupter 410. In a preferred arrangement, the decision circuit 140 utilizes the instantaneous current level and the rate of change of the instantaneous current to decide when asynchronous operation is required. Of course, it should be realized that in other specific arrangements, the current $I_1$ rms can be selected to be any desired level resulting in peak currents that are below the interrupting capabilities of the circuit interrupter defined in terms of the instantaneous magnitude of the current at the time of interruption.

Turning now to a specific configuration of a preferred arrangement of the decision circuit 140, the TCS (Time-Current Signal) at 126 is connected to one input of a 2-input AND gate 162. The second input of the AND gate 162 is connected to a memory signal 164 that represents whether or not an overcurrent greater than $I_3$ could have been present within a predetermined time interval. This predetermined time interval must be longer than the duration of a half-cycle of the line current. The output 166 of the AND gate 162 is connected to a time delay stage 168 and to one input of a 2-input OR gate 170. The output of the OR gate 170 provides the stored energy control signal 144. The output 172 of the time delay stage 168 is connected to one input of a 2-input OR gate 174. The output of the OR gate 174 provides the trip signal 142.

Accordingly, when the time-current signal generator 120 provides a TCS signal at 126, the stored energy control signal 144 is provided to the power supply 14 to increase the stored energy provided that the memory signal 164 is true. Further, if the peak overcurrent is predicted to be less than $I_3$, the trip signal 142 is provided to the gate in the power supply 14 after the delay time of the time delay stage 168; the delay time allowing time for the stored energy to be sufficiently increased to reliably operate the interrupter operator 400. The decision circuit 140 is also arranged to ensure that the peak overcurrent is below $I_3$ for the trip signal 142 to be generated. This arrangement provides for operation of the interrupter operator 400 on a random or asynchronous basis provided that the peak overcurrent is below $I_3$. It should be realized that in specific arrangements where additional stored energy is not required, the time delay stage 168 is not required.

The memory signal 164 to the AND gate 162 is provided by a memory stage 176. The memory stage 176 receives an input 178 at the output of an inverter gate 180. The inverter gate 180 is driven at the output 182 of a 2-input AND gate 184. The AND gate receives an $I_L$ parameter at 186 and an M parameter signal at 188. The $I_L$ and M parameter signals are generated by the parameter signal generator 150. The parameters $I_L$ and M are chosen to predict that an overcurrent may include instantaneous values greater than $I_3$ when both M and $I_L$ are true. The parameter M represents a threshold value of the rate of change of the overcurrent (di/dt) such that when M is exceeded and the instantaneous current is at least $I_L$, it is predicted that an overcurrent exists which may exhibit peak currents greater than $I_3$ due to the presence of a sinusoidal waveform of $I_1$ kA rms.

When such an overcurrent is predicted (i.e. may exist), the signal 178 to the memory stage 176 causes the memory 176 to provide a low, disabling signal at 164 which blocks the TCS signal 126 from passing through the AND gate 162 to the OR gate 170 or to the time delay stage 168. Thus, neither of the signals 142 of 144 is provided and asynchronous interruption is prevented. The memory stage 176 further includes a timer function such that once an overcurrent condition is predicted that may exceed $I_3$, the signal at 164 is maintained in the disabling, low state for a predetermined time interval. Additionally, the memory stage 176 also includes an immediate reset function such that the signal at 164 is immediately placed in the disabling state whenever a high overcurrent condition is predicted; i.e. $I_L$ and M true.

Considering now the synchronous mode of operation of the decision circuit 140, whenever a high overcurrent condition is predicted (i.e. the possibility of peak instantaneous currents exceeding $I_3$), the TCS signal 126, when active, is gated to provide the signals at 142 and 144 in synchronism with the instantaneous current such that interruption is ensured at levels of instantaneous current that do not exceed $I_3$; i.e. the interruption capabilities of the circuit interrupter 410 or other selected value. To this end, the $I_L$ and M parameter signals and an $I_H$ parameter signal are utilized to define an instantaneous synchronizing signal. Referring now to Fig. 5 which is a portion of Fig. 4 on an enlarged scale, the $I_H$ parameter corresponds to an instantaneous current level that is greater than $I_L$ and is chosen to ensure that interruption operation by the circuit interrupter 410 will take place at levels of instantaneous currents that do not exceed $I_3$; i.e. within the capabilities of the circuit interrupter. The level $I_H$ is chosen along with $I_L$ and M to product this operation taking into account the overall operating parameters of the circuit interrupter 410, the interrupter operator 400, the gate in the power supply 14 and the maximum available fault current. The operating parameters include the operating time of the various devices. As shown in Fig. 4, the decision circuit 140 predicts that the overcurrent will exceed $I_3$ and interrupts the current in accordance with the waveform 300.

Considering the specific arrangement of the decision circuit 140 of Fig. 1, the $I_H$ signal at 190 is true when the instantaneous current does not exceed $I_H$. The $I_H$ signal at 190 is provided by the parameter signal generator 150 and is connected at one input of a 2-input AND gate 192. The second input of the AND gate 192 is connected to the output 182 of the AND gate 184, representing $I_L \cdot M$. The output 194 of the AND gate 192, representing $I_L \cdot M \cdot I_H$ is connected to the second input of the OR gate 170. Additionally, the output 194 of the AND gate 192 is connected to one input of a 2-input AND gate 196. The second input of the AND gate 196 is connected to the TCS signal 126. The output 198 of the AND gate 196 is connected to the second input of the OR gate 174. Accordingly, when a TCS signal 126 is generated by the time-current signal generator 120, the $I_L \cdot M \cdot I_H$ condition must be true before the stored energy control signal 144 and the trip signal at 142 are provided to initiate operation of the circuit interrupter 410. Since the TCS signal is generated asynchronously with respect to the period or perturbations of the overcurrent, the $I_L \cdot M \cdot I_H$ condition may be generated either before, after, or simultaneously with the TCS signal.

While the preferred arrangement of the control circuit 16 utilizes predictive parameters such as $I_L$, M and $I_H$ to control the synchronous operation of the circuit interrupter 410 after appropriate time delays in accordance with an inverse-type TCC, it should be realized that it is also possible in other specific embodiments to utilize only the instantaneous current level or other parameters derived from the instantaneous current to provide such synchronization. For example, $I_H$ may be utilized as the input to the memory 176 or to the AND gate 162. Further, $I_H$ may be used for the input at 194 to the OR gate 170. The choice of synchronizing parameters depends on the circuit application, the thermal and interruption capabilities of the circuit interrupter, the accuracy of the sensed signals, and the power requirements of the interrupter operator 400 versus the availability of stored energy in the power supply 14 and/or the available current in the line 106. In the preferred arrangement where the sensing current also supplies the operating power for the interrupter operator 400 and the control circuit 16, either directly or by energy storage, the saturation effects of the current transformer 56 at higher current levels between $I_1$ and $I_2$ renders level synchronizing via the sensed instantaneous current less than desirable due to possible ambiguities. The addition of the current sensing arrangement 60 in conjunction with the current transformer 56 enables appropriate level sensing of the overcurrent for the purposes of the Time-Current Signal Generator 120 throughout the range of operation thereof as explained in more detail in co-pending European Application EP—A—225006 assigned to S&C Electric Company. However, it is relatively impractical to provide a current sensing arrangement that will provide accurate, unambiguous, instantaneous overcurrent magnitude in the range of desired operation, e.g. where $I_2$ is in the range of 10—40 ka rms. The decision circuit 140 via the energy storage control signal 144 also aids in providing adequate stored energy and a stable output at 500 for the situation where higher overcurrents are present corresponding to the range of $I_1$—$I_2$ but the saturation effects of the current transformer 56 reduce the available power for energy storage and may cause loss of regulation at 500.

Further, it should also be realized that in other arrangements, the control circuit 16 is provided with an instantaneous signal generator 200 as set forth in U.S. Patent No. 4,571,658 and/or the time-current signal generator 120 that includes the range selection features set forth in U.S. Patent No. 4,571,658 and European Patent Application 83305992.6. For example and referring now to Fig. 3, the exemplary time-current characteristic 504 and 506 are provided. These time-current characteristics are exemplary and it should be realized that various other TCC curves may also be provided. In arrangements where an instantaneous TCC portion is provided along with inverse-time TCC portions, one or more of the parameters $I_L$ and $I_H$ may be provided to the decision circuit 140 from the instantaneous trip signal generator 200 dependent on the particular TCC portion and the TCC that is desired.

Referring now additionally to Fig. 6, a specific embodiment of the decision circuit 140 and the parameter signal generator 150 is illustrated that provides the various signals and parameters as discussed hereinbefore in connection with Figs. 1—3. For example, the memory stage 176 is implemented by the diode 210, the capacitor 212, and the resistor 214. The cathode of the diode 210 is connected to the output of the a 2-input NAND gate 216; the NAND gate 216 performing the logic function of the AND gate 184 and the inverter 180. The anode of the diode 210 is connected to the input 217 of a 2-input NAND gate 218. The resistor 214 is connected across the diode 210. The capacitor 212 is connected between the power supply output 500 and the input 217 to the gate 218. When the $I_L$ and M signals at the inputs to the NAND gate 216 are high, the input to the NAND gate 218 is immediately driven to a low level thereby charging the capacitor 212 through the diode 210. After the $I_L \cdot M$ signal at the output of the NAND gate 216 goes high, the capacitor 212 is discharged in accordance with the RC time constant of the resistor 214 and the capacitor 212. After the predetermined delay, the input 217 to the NAND gate 218 reaches a high level, again enabling the gate 218 to pass a TCS signal at 126. The RC time constant of the memory stage 176 is desirably chosen to be equal to or greater than any storage or delay time of the time-current signal generator 120 such that any TCS signal generated at 126 after the prediction of the overcurrent will be inhibited.

## Claims

1. A control circuit (16) responsive to the line current in an alternating-current line (32) for providing a trip signal (at 142) the control circuit comprising:
signal generator means (120) responsive to the line current for producing a control signal (TCS at 126) in the presence of line currents above a predetermined level and after the passage of a time delay that is inversely related to the line current, characterised in that the control circuit comprises:
a decision circuit (150, 184) for predicting, on the basis of one or more parameters of the line current, whether the instantaneous value of the line current will exceed a first predetermined instantaneous current level ($I_3$); and

means (140) for providing a trip signal (at 142) in response to said control signal when the instantaneous value of the current is not predicted to exceed the first predetermined instantaneous current level, and, when the instantaneous value of the current is predicted to exceed the first predetermined instantaneous current level ($I_3$), for providing a trip signal in response to said control signal (TCS) and at a suitable point in the waveform of the alternating current such that the trip signal is generated only when the instantaneous value of the line current is below a second predetermined instantaneous current level ($I_H$) which is below the first predetermined instantaneous circuit level ($I_3$).

2. The control circuit of claim 1, characterised in that the decision circuit effects a comparison between the instantaneous value of the current and the second predetermined current level ($I_H$).

3. The control circuit of claim 1, characterised in that the decision circuit predicts whether the instantaneous value of the line current will exceed the first predetermined instantaneous current level on the basis of the value of the rate of change of the line current.

4. The control circuit of claim 1, characterised in that the decision circuit predicts whether the instantaneous value of the line current will exceed the first predetermined instantaneous current level on the basis of comparisons between the instantaneous value of the current and a third predetermined instantaneous current level ($I_L$) and between the rate of change of the line current and a predetermined threshold value (M) of the rate of change.

5. The control circuit of claim 1, characterised in that it comprises means (e.g., 186, 188, 184, 180, 176) for generaging a signal (at 164) representing that the line current may have recently exceeded a predetermined current level.

6. The control circuit of claim 4, characterised in that the decision circuit predicts that the instantaneous value of the line current will exceed the first predetermined instantaneous current level ($I_3$) in the presence of both a rate threshold signal (M at 188), representing that the rate of change of the line current is greater than the predetermined threshold value, and a level threshold signal (186) representing that the instantaneous value of the current exceeds the third predetermined instantaneous current level ($I_L$), the third predetermined instantaneous current level being lower than the first ($I_3$).

7. The control circuit of claim 6, further characterised in that the decision circuit is responsive to a signal (at 190) representing that the instantaneous value of the current is below the second predetermined current level ($I_H$).

8. The control circuit of claim 6 or 7 further characterised in that the decision circuit includes memory means (176) for maintaining for a predetermined time interval a prediction that the instantaneous value of the line current may exceed the first predetermined instantaneous current level.

9. The control circuit of claim 8, further characterised in that the memory means is set immediately upon the occurrence of said rate threshold signal (M) and said level threshold signal ($I_L$).

10. The control circuit of claim 8 or 9, further characterised in that said predetermined time interval is greater than the duration of one-half cycle of the line current.

11. The control circuit of any preceding claim, wherein said signal generator means (500) has a delay time defined by the delay in providing said control signal (TCS) in response to changes in the line current, said control circuit being further characterised by means (176) for disabling for a predetermined time interval the generation of said trip signal for line currents, the instantaneous values of which will exceed the first predetermined current level ($I_3$), said predetermined time interval being greater than said delay time of said signal generator means, the start of said predetermined time interval being determined from one or more predetermined parameters (e.g., $I_L$, M) of the line current.

**Patentansprüche**

1. Steuerschaltung (16), die auf einen Leitungsstrom in einer Wechselstromleitung (32) zum Erzeugen eines Schaltsignals (bei 142) anspricht, wobei die Steuerschaltung einen Signalgenerator (120) enthält, der auf den Leitungsstrom zum Erzeugen eines Steuersignals (TCS bei 126) bei Auftreten von Leitungsströmen oberhalb. eines vorbestimmten Pegels und nach Verstreichen einer Zeitverzögerung, die umgekehrt in Beziehung zu dem Leitungsstrom steht, anspricht, dadurch gekennzeichnet, daß die Steuerschaltung umfaßt:

—eine Entscheidungsschaltung (150, 184) zum Vorhersagen auf der Grundlage eines oder mehrerer Parameter des Leitungsstroms, ob der Augenblicks-Wert des Leitungsstroms einen ersten vorbestimmten Augenblicks-Strompegel ($I_3$) übersteigen wird, und

—ein Mittel (140) zum Erzeugen eines Schaltsignals (bei 142) in Reaktion auf das Steuersignal, wenn der Augenblicks-Wert des Stroms nicht dahingehend vorhergesagt ist, daß er den ersten vorbestimmten Augenblicks-Strompegel überschreiten wird, und, wenn der Augenblicks-Wert des Stroms dahingehende vorhergesagt ist, daß er den ersten vorbestimmten Augeblicks-Strompegel ($I_3$) überschreiten wird, zum Erzeugen eines Schaltsignals in Reaktion auf das Steuersignal (TCS) und bei einem geeigneten Punkt in der Wellenform des Wechselstroms derart, daß das Schaltsignal nur dann erzeugt wird, wenn der Augeblicks-Wert des Leitungsstroms unterhalb eines zweiten vorbestimmten Augenblicks-Strompegels ($I_H$) liegt, der seinerseits unterhalb des ersten vorbestimmten Augenblicks-Strompegels ($I_3$) liegt.

2. Steuerschaltung nach Anspruch 1, dadurch gekennzeichnet, daß die Entscheidungsschaltung einen Vergleich zwischen dem Augenblicks-Wert des Stroms und dem zweiten vorbestimmten Strompegel ($I_H$) bewirkt.

3. Steuerschaltung nach Anspruch 1, dadurch gekennzeichnet, daß die Entscheidungsschaltung vorhersagt, ob der Augenblicks-Wert des Leitungsstroms den ersten vorbestimmten Augenblicks-Strompegel überschreiten wird, und zwar auf der Grundlage des Werts der Änderungsrate des Leitungsstroms.

4. Steuerschaltung nach Anspruch 1, dadurch gekennzeichnet, daß die Entscheidungsschaltung vorhersagt, ob der Augenblicks-Wert des Leitungsstroms den ersten vorbestimmten Augenblicks-Strompegel überschreiten wird, und zwar auf der Grundlage von Vergleichen zwischen dem Augenblicks-Wert des Stroms und einem dritten vorbestimmten Augenblicks-Strompegels ($I_L$) sowie zwischen dem Wert der Änderungsrate des Leitungsstroms und einem vorbestimmten Schwellwert (M) der Änderungsrate.

5. Steuerschaltung nach Anspruch 1, dadurch gekennzeichnet, daß Mittel (z.B. 186, 188, 184, 180, 176) zum Erzeugen eines Signals (bei 164) vorgesehen sind, das aussagt, daß der Leitungsstrom kurz zuvor einen vorbestimmten Strompegel überschritten haben kann.

6. Steuerschaltung nach Anspruch 4, dadurch gekennzeichnet, daß die Entscheidungsschaltung vorhersagt, daß der Augenblicks-Wert des Leitungsstroms den ersten vorbestimmten Augevblicks-Strompegel ($I_3$) überschreiten wird, und zwar bei Auftreten sowohl eines Ratenschwellwertsignals (M bei 188), das aussagt, daß die Änderungsrate des Leitungsstroms größer als der vorbestimmte Schwellwertpegel ist, als auch eines Pegelschwellsignals (bei 186), das aussagt, daß der Augenblicks-Wert des Stroms den dritten vorbestimmten Augenblicks-Strompegel ($I_L$) überschreitet, wobei der dritte vorbestimmte Augenblicks-Strompegel niedriger als der erste ($I_3$) ist.

7. Steuerschaltung nach Anspruch 6, dadurch gekennzeichnet, daß die Entscheidungsschaltung auf ein Signal (bei 190) reagiert, das aussagt, daß der Augenblicks-Wert des Stroms unterhalb des zweiten vorbestimmten Strompegels ($I_H$) liegt.

8. Steuerschaltung nach Anspruch 6 oder 7, dadurch gekennzeichnet, daß die Entscheidungsschaltung einen Speicher (176) zum Aufrechterhalten einer Vorhersage für eine vorbestimmtes Zeitintervall enthält, daß der Augenblicks-Wert des Leitungsstroms den ersten vorbestimmten Augenblicks-Strompegels überschreiten kann.

9. Steuerschaltung nach Anspruch 8, dadurch gekennzeichnet, daß der Speicher unmittelbar auf das Auftreten des Ratenschwellwertsignals (M) und des Pegelschwellwertsignals ($I_L$) hin gesetzt wird.

10. Steuerschaltung nach Anspruch 8 oder 9, dadurch gekennzeichnet, daß das vorbestimmte Zeitintervall größer als die Dauer einer Halbperiode des Leitungsstroms ist.

11. Steuerschaltung nach einem der vorhergehenden Ansprüche, bei der der Signalgenerator (500) eine Verzögerungszeit hat, die durch die Verzögerung beim Abgeben des Steuersignals (TCS) in Reaktion auf Änderungen in dem Leitungsstrom definiert ist, wobei die Steuerschaltung gekennzeichnet ist durch ein Mittel (176) zum für ein vorbestimmtes Zeitintervall zu bewirkenden Sperren der Erzeugung des Schaltsignals für Leitungsströme, deren Augenblicks-Werte den ersten vorbestimmten Strompegel ($I_3$) überschreiten werden, wobei das vorbestimmte Zeitintervall größer als die Verzögerungszeit des Signalgenerators ist und wobei der Beginn des vorbestimmten Zeitintervalls von einem oder mehreren vorbestimmten Parametern (z.B. $I_L$, M) des Leitungsstroms festgelegt ist.

## Revendications

1. Un circuit de commande (16) sensible au courant de ligne dans une ligne de courant alternatif (32) pour fournir un signal de déclenchement (en 142) le circuit de commande comprenant:

un moyen générateur de signal (120) sensible au courant de ligne pour produire un signal de commande (TCS en 126) en présence de courants de ligne au-dessus d'un niveau prédéterminé et après l'écoulement d'un temps de retard qui est rapporté de manière inverse au courant de ligne, caractérisé en ce que le circuit de commande comprend:

un circuit de décision (150, 184) pour prédire, sur la base d'une ou de plusieurs paramètres du courant de ligne, si la valeur instantanée du courant de ligne dépassera ou non premier niveau de courant instantané prédéterminé ($I_3$), et

un moyen (140) pour fournir un signal de déclenchement (142) en réponse audit signal de commande lorsque la valeur instantanée du courant n'est pas prédite pour dépasser le premier niveau de courant instantané prédéterminé et, lorsque la valeur instantanée du courant est prédite pour dépasser le premier niveau de courant instantané prédéterminé ($I_3$) pour fournir un signal de déclenchement en réponse audit signal de commande (TCS) et en un point approprié dans la forme d'onde du courant alternatif tel que le signal de déclenchement soit produit seulement lorsque la valeur instantanée du courant de ligne est en-dessous d'un second niveau de courant instanté prédéterminé ($I_H$) qui est en-dessous du premier niveau de circuit instantané prédéterminé ($I_3$).

2. Le circuit de commande de la revendication 1, caractérisé en ce que le circuit de décision effectue une comparaison entre la valeur instantanée du courant et le second niveau de courant prédéterminé ($I_H$).

3. Le circuit de commande de la revendication 1, caractérisé en ce que le circuit de décision prédit si la valeur instantanée du courant de ligne dépasser a ou non le premier niveau de courant instantané prédéterminé sur la base de la valeur de la vitesse de changement du courant de ligne.

4. Le circuit de commande de la revendication 1, caractérisé en ce que le circuit de décision prédit si la valeur instantanée du courant de ligne dépasser a ou non le premier niveau de courant instantané prédéterminée sur la base des comparaisons entre la valeur instantanée du courant et un troisième niveau de courant instantané prédéterminé ($I_L$) et entre la vitesse de changement du courant de ligne et une valeur de seuil prédéterminée (M) de la vitesse de changement.

5. Le circuit de commande de la revendication 1, caractérisé en ce que celui-ci comprend un moyen (par exemple 186, 188, 184, 180, 176) pour produire un signal (en 164) représentant que le courant de ligne peut avoir rêcemment dépassé ave niveau de courant prédéterminé.

6. Le circuit de commande de la revendication 4, caractérisé en ce que le circuit de décision prédit que la valeur instantanée du courant de ligne dépasser a le premier niveau de courant instantané prédéterminé ($I_3$) en présence d'à la fois un signal de seuil de vitesse (M en 188), représentant que la vitesse de changement du courant de ligne est supérieure à la valeur de seuil prédéterminée, et un signal de seuil de niveau (186) représentant que la valeur instantanée du courant dépasse le troisième niveau de courant instantané prédéterminé ($I_L$), le troisième niveau de courant instantané prédéterminé étant inférieur au premier ($I_3$).

7. Le circuit de commande de la revendication 6, caractérisé en outre en ce que le circuit de décision est sensible à un signal (en 190) représentant que la valeur instantanée du courant est en-dessous du second niveau de courant prédéterminé ($I_H$).

8. Le circuit de commande de la revendication 6 ou 7, caractérisé en outre en ce que le circuit de décision comprend un moyen de mémoire (176) pour maintenir pendant un intervalle de temps prédéterminé une prédiction que la valeur instantanée du courant de ligne peut dépasser le premier niveau de courant instantané prédéterminé.

9. Le circuit de commande de la revendication 8, caractérisé en outre en ce que le moyen de mémoire est initialisé immédiatement lors de l'apparition dudit signal de seuil de vitesse (M) et dudit signal de seuil de niveau ($I_L$).

10. Le circuit de commande de la revendication 8 ou 9, caractérisé en outre en ce que ledit intervalle de temps prédéterminé est supérieur à la durée d'une demi période du courant de ligne.

11. Le circuit de commande de l'une quelconque des revendications précédentes, dans lequel ledit moyen générateur de signal (500) présente un temps de retard défini par le retard en fournissant ledit signal de commande (TCS) en réponse aux changements dans le courant de ligne, ledit circuit de commande étant en outre caractérisé par un moyen (176) pour invalider pendant un intervalle de temps prédéterminé la production dudit signal de déclenchement pour des courants de ligne, dont les valeurs instantanées dépasseront le premier niveau de courant prédéterminé ($I_3$), ledit intervalle de temps prédéterminé étant supérieur audit temps de retard dudit moyen générateur de signal, le départ dudit intervalle de temps prédéterminé étant déterminé à partir d'un ou de plusieurs paramètres prédéterminés (par exemple $I_L$, M) du courant de ligne.

EP 0 225 007 B1

1

FIG. 3

FIG. 2

FIG. 5

FIG. 4

FIG. 5

FIG - 6

144

142

218 126 FROM 120

217

140

212 176

210 214 190 186

216 M

188

$I_H$ $I_L$

150

107